# EUROPEAN PATENT SPECIFICATION

(11) **EP 0 752 398 B1**
(45) Date of publication and mention of the grant of the patent: **03.11.1999**
(21) Application number: 96110723.2
(22) Date of filing: 03.07.1996
(51) Int. Cl.: C04B 35/80, C22C 1/09

(54) **A method of manufacturing a sintered composite product and an intermediate composite product which can be sintered**
Verfahren zur Darstellung eines gesinterten Verbundkörpers und eines sinterfähigen Verbundkörper-Zwischenproduktes
Procédé de fabrication d'un produit composite fritté et produit composite intermédiaire frittable

(30) Priority: 07.07.1995 IT TO950577
(43) Date of publication of application: 08.01.1997
(73) Proprietor: FIAT AUTO S.p.A., 10135 Torino (IT)
(72) Inventor: Da Re', Mario, 10128 Torino (IT)
(74) Representative: Serra, Francesco

(56) References cited:
- EP-A- 0 379 328
- WO-A-95/02564
- DE-A- 2 722 575
- US-A- 5 403 660
- R.J.Brook,'Concise Encyclopedia of Advanced Ceramic Materials',Pergamon Press, page 57(1991)

## Description

The present invention relates to products made of composite material, particularly composite material filled with carbon fibres usable, for example, to make vehicle components having structural functions and distinguished by good resistance to mechanical stresses together with limited weight.

The main object of the present invention is to propose a method which permits relatively easy and economical manufacture of products made of composite material filled with carbon fibres and having good mechanical strength and impact-energy absorption characteristics, together with a particularly low weight and good thermal resistance, the products also having quite complex shapes, for example, so as to be suitable for use as chassis parts, bulkheads between the passenger compartment and the engine compartment, roll-bars or motor-vehicle pillars, for small-scale production.

EP-A-379 328 discloses a method of manufacturing a sintered composite product including a step in which a ceramic powder is mixed with a binder to produce a pasty mixture to be subjetced to a sintering process, comprising the steps of incorporating carbon-fiber precursor filaments in the form of loose fibers, in the mixture and sintering the mixture in conditions such that the filaments are converted into carbon fibers. The same document further discloses a method of manufacturing an intermediate composite product which can be sintered, including carrying out preliminary shaping of the pasty mixture and a final shaping step by means of moulding, such as a thermo-forming operation, before the sintering step.

In particular, the invention relates to a method of manufacturing a sintered composite product according to claim 1.

By virtue of these characteristics, the production costs of the finished composite product filled with carbon fibres are considerably reduced in comparison with the costs which would have to be borne if carbon fibres were incorporated in the pasty mixture, since the cost of carbon fibres is much higher than that of the carbon-fibre precursor filaments. Some of the large amount of heat necessary to carry out the sintering process can thus advantageously be used to convert the carbon-fibre precursor filaments into-carbon fibres.

The filaments are preferably made of a pre-oxidised acrylic-based polymer. These filaments have the advantage of being easily obtainable commercially and of being converted into carbon fibres with good mechanical properties if subjected to the temperatures typically required to carry out most processes for the sintering of ceramic materials.

A further subject of the invention is a method of manufacturing an intermediate composite product which can be sintered, as set forth in claim 3.

Further characteristics and advantages of the present invention will become clearer from the following detailed description, given with reference to the appended drawings, provided purely by way of non-limiting example, in which:
Figure 1 is a schematic view which shows a first step of the method according to the invention,
Figure 2 is a perspective view of a semi-processed element which can be produced as a result of the execution of the first step of the method shown in Figure 1, and
Figures 3 to 5 are schematic views which show further steps of the method according to the invention, in sequence.

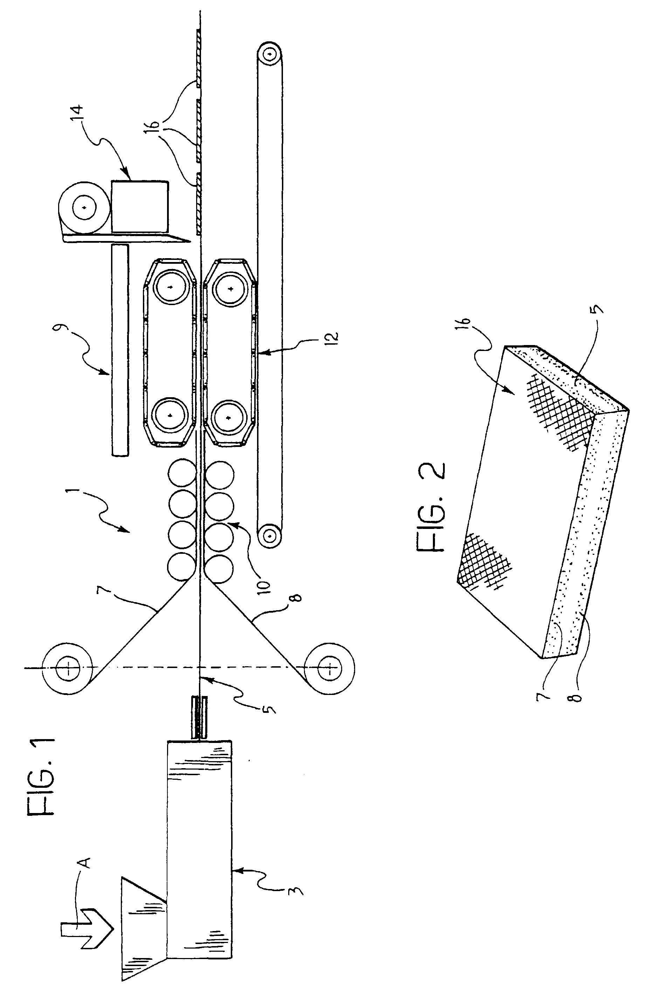

With reference first of all to Figure 1, equipment for producing a semi-processed element of composite material is generally indicated 1.

The equipment 1 comprises a mixer/extruder unit 3 to the input of which a metallic and/or ceramic powder and a binder for supporting the powder are supplied (arrow A of Figure 1).

The powder may be, for example, an aluminium oxide such as Al₂O₃ of the SOL-GEL or tabular type, or a magnesium oxide such as MgO, or a titanium oxide such as TiO₂ or Ti₂O₃.

A phenolic resin or a polyolefin wax may be used, for example, as the binder.

The quantities of powder and binder, expressed as percentages by weight, may be about 80-90% and 20-10%, respectively.

A pasty mixture is delivered at the output of the mixer/extruder unit 3 in the form of a strip 5 including the powder and the binder. If the resulting pasty mixture is too viscous, a diluent, for example, isostearic acid or palm oil, may advantageously be added thereto.

Respective sheets 7 and 8 of carbon-fibre precursor filaments, for example, in the form of woven or non-woven textiles, are then associated with the pasty mixture on the opposite faces of the strip 5.

These textiles are available commercially as textiles of oxidised or pre-oxidised acrylic filaments, particularly oxidised polyacrylonitrile filaments, for example, with the registered trade mark PANOX, produced by RK Textile Composite Fibres Ltd.

The pasty mixture in strip form with the associated sheets 7 and 8, constituting a so-called "mat", is then supplied to a forming unit 9 in which it undergoes preliminary shaping by means of a mechanical compression step in order to define its dimensions precisely and to incorporate the sheets 7 and 8 in the pasty mixture 5 so that the filaments are completely impregnated with the pasty mixture. In particular, the unit 9 comprises pairs of calendering rollers 10 and a chain compactor 12.

Downstream of the unit 9 there is a cutting tool 14 with a movable blade which cuts the mat into portions so as to define successive generally panel-shaped semi-processed elements 16 which constitute the intermediate products of the method.

A panel 16, for simplicity, of rectangular shape in plan, is shown in Figure 2, which shows its cross-section. The panel 16 has a "sandwich" structure comprising an intermediate thin layer of pasty mixture 5 and a pair of outer layers including the sheets 7 and 8 completely impregnated with the pasty mixture 5.

The panels 16 thus produced can therefore be stored in a suitable environment to await subsequent processing.

The panels 16 then undergo a final shaping step so as to adopt substantially the shape of the finished product.

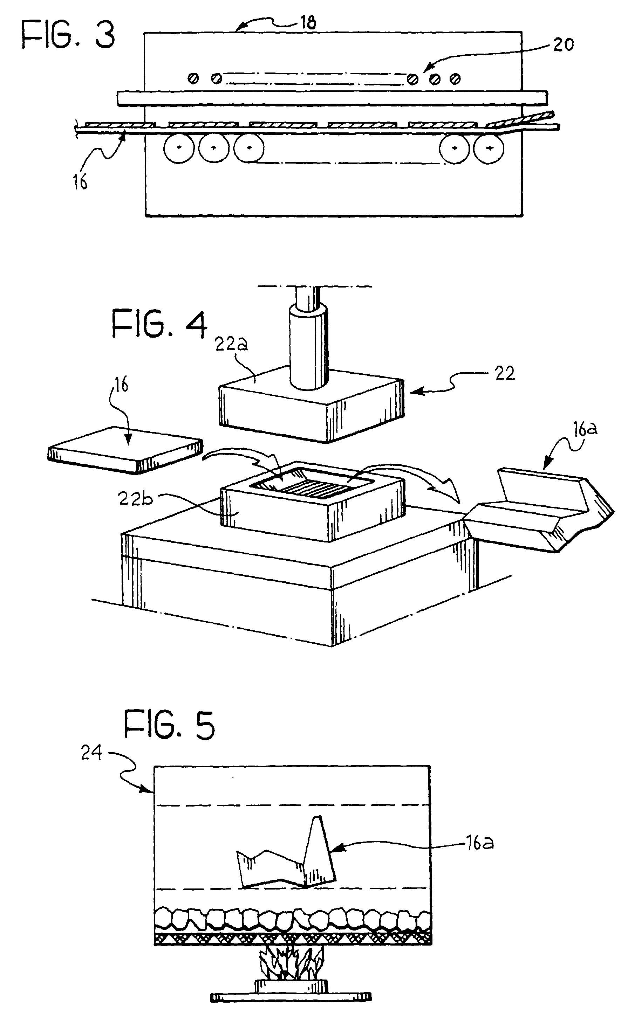

In particular, with reference to Figures 3 to 5, each panel 16 undergoes preliminary heating in an oven 18 within which it is moved in the proximity of heater elements 20 by a conveyor 19 so as to be softened. The degree of softening can be varied at will by alteration of the speed of advance of the conveyor 19 and/or of the quantity of heat supplied by the elements 20 per unit time.

The final shaping of the panels 16 is advantageously carried out in a vertical press 22 comprising a pair of half-dies 22a, and 22b heated, for example, by means of resistors or hot oil, so that each panel 16 undergoes a thermo-forming process during which it is subjected to pressure and heat so as to form a body 16a having substantially the final shape of the product to be produced.

Alternatively, if the finished product is to have a tubular shape, the panels 16 may be subjected, for this purpose, to a forming process known, for example, from the Applicant's Italian patent application TO94A000358.

The shaped body 16a is then inserted in an oven 24 in which it undergoes the sintering process in conditions such that the binder is eliminated and the filaments of the textiles 7 and 8 are converted into carbon fibres. As a result of the elimination of the binder during the sintering process, the finished product has a smaller volume than the body 16a, the reduction in volume depending upon the ratio between the quantity of binder and the quantity of powder used.

A detailed example of this method is given below.

The powder used was SOL-GEL alumina powder (Al₂O₃) with a particle size of between 20 and 200 nanometres. The binder used was a PF phenolic resin with a density of 1.3 g/cm³ marketed, for example, by Rhone with the trade mark Progilithe.

The percentages by weight of the alumina powder and of the binder in the pasty mixture were 85% and 15%, respectively.

The pre-oxidised carbon-fibre precursor filaments used formed a textile of the PANOX type mentioned above and had the following characteristics:

| | |
|---|---|
| - starting material: | polyacrylonitrile in fibre form; |
| - number of filaments: | 320000; |
| - nominal weaving dimension: | 44 Ktex; |
| - nominal filament diameter: | 11·10⁻⁶m; |
| - specific gravity: | 1.4; |
| - elongation: | 19%; |
| - individual filament strength: | 18g/tex. |

The preliminary heating step took place at a temperature of about 400°C for a period variable between 1 and 2 minutes.

The shaping by thermo-forming was carried out in a single step with a standard vertical press, the half-dies of which were heated to a temperature of between 80°C and 150°C. The thermo-forming operation continued for from about 1 to 2 minutes and, in the course thereof, the semi-processed element was subjected to a pressure of 70-90 kg/cm².

The sintering process comprised three successive oven treatment stages. In the first stage, the binder was eliminated in demineralized water or another suitable liquid at about 70°C for 8 hours, the second step involved heat treatment at about 400°C for 4-6 hours and the last step consisted of a further heat treatment at about 1100°C for 6-8 hours.

A test sample of the finished product thus produced had the following mechanical properties:

| | |
|---|---|
| - bending strength: | 300-340 MPa; |
| - bending modulus: | 15-18 GPa; |
| - tensile strength: | 70-125 MPa; |
| - tensile modulus: | 11-17 GPa; |
| - Izod impact strength with notch: | 180-210 J/m of notch·10; |
| - specific weight: | 2.3-2.7 kg/dm³. |

## Claims

1. A method of manufacturing a sintered composite product, including a step in which a metallic and/or ceramic powder is mixed with a binder to produce a pasty mixture (5) to be subjected to a sintering process, comprising the steps of incorporating carbon-fibre precursor filaments (7, 8) in the mixture (5) and subjecting the mixture (5), with the incorporated filaments (7, 8), to a sintering process in conditions such that the filaments are converted into carbon fibres,
characterized in that the pasty mixture (5) is extruded in form of a strip and in that the carbon-fibre precursor filaments form at least a textile sheet (7, 8) which is associated with the mixture (5) after its extrusion.

2. A method according to Claim 1, characterized in that the filaments (7, 8) are made of a pre-oxidised acrylic-based polymer.

3. A method of manufacturing an intermediate composite product which can be sintered, including the steps of:
- mixing a metallic and/or ceramic powder with a binder in order to produce a pasty mixture (5),
- incorporating carbon-fibre precursor filaments (7, 8) in the pasty mixture,
- carrying out preliminary shaping of the pasty mixture (5), with the incorporated filaments (7, 8), to produce a plurality of semi-processed elements (16),
characterized in that the said filaments form at least one textile sheet (7, 8) and in that it comprises the steps of:
- extruding the pasty mixture in the form of a strip (5), and
- associating the pasty mixture (5) with said at least one textile sheet (7, 8) after the extrusion step.

4. A method according to Claim 3, characterized in that two textile sheets (7, 8) of the filaments are associated with the pasty mixture (5) in strip form, one on each of its opposite faces.

5. A method according to any one of Claims 3 or 4, characterized in that the pasty mixture (5), with the at least one textile filament sheet (7, 8) associated therewith, is subjected to a compression step in order to incorporate said at least one sheet (7, 8) in the pasty mixture (5).

6. A method according to Claim 5, characterized in that the compression step comprises a calendering stage and a compaction stage.

7. A method according to any one of Claims 3 to 6, characterized in that the semi-processed elements (16) are produced from the strip as a result of a cutting operation.

8. A method according to any one of Claims 3 to 7, characterized in that the semi-processed elements (16) undergo a preheating step before the final shaping step.

9. A method according to any one of Claims 3 to 8, characterized in that the semi-processed elements (16) are subjected to a final shaping step by means of moulding before the sintering process.

10. A method according to Claim 9, characterized in that the final shaping step by means of moulding consists of a thermo-forming operation.

11. A method according to any one of Claims 3 to 10, characterized in that the filaments (7, 8) are made of a pre-oxidised acrylic-based polymer.

## Patentansprüche

1. Verfahren zur Herstellung eines gesinterten Verbundprodukts, wobei das Verfahren einen Schritt aufweist, bei dem ein metallisches und/oder keramisches Pulver mit einem Bindemittel gemischt wird, um ein pastenartiges Gemisch (5) herzustellen, das einem Sintervorgang unterworfen werden soll, der Schritte enthält, um Fäden (7, 8), die eine Vorstufe für Kohlefasern darstellen, in das Gemisch (5) einzubetten und das Gemisch (5) mit den eingebetteten Fäden (7, 8) einem Sintervorgang unter Bedingungen zu unterwerfen, dass die Fäden in Kohlefasern umgesetzt werden,
dadurch gekennzeichnet, dass das pastenartige Gemisch (5) in Form eines Bands stranggepresst wird, und dass die Fäden, die eine Vorstufe für Kohlefasern darstellen, zumindest eine Gewebefolie (7, 8) bilden, die dem Gemisch (5) zugeordnet wird, nachdem das Gemisch stranggepresst wurde.

2. Verfahren gemäß Anspruch 1, dadurch gekennzeichnet, dass die Fäden (7, 8) aus einem voroxidierten Polymer auf Acrylbasis bestehen.

3. Verfahren zur Herstellung eines Verbundzwischenprodukts, das gesintert werden kann, wobei das Verfahren folgende Schritte aufweist:
- Mischen eines metallischen und/oder keramischen Pulvers mit einem Bindemittel, um ein pastenartiges Gemisch (5) herzustellen,
- Einbetten der Fäden (7, 8), die eine yorstufe für Kohlefasern darstellen, im pastenartigen Gemisch,
- Ausführen einer Vorformung des pastenartigen Gemischs (5) mit den eingebetteten Fäden (7, 8), um eine Vielzahl von halbfertigen Elementen (16) herzustellen,
dadurch gekennzeichnet, dass die Fäden zumindest eine Gewebefolie (7, 8) bilden, und dass das Verfahren folgende Schritte aufweist:
- Strangpressen des pastenartigen Gemischs in die Form eines Bands (5), und
- Zuordnen von der zumindest einen Gewebefolie (7, 8) dem pastenartigen Gemisch (5) nach dem Strangpressschritt.

4. Verfahren gemäß Anspruch 3, dadurch gekennzeichnet, dass zwei Gewebefolien (7, 8) der Fäden dem pastenartigen Gemisch (5) in Form eines Bands zugeordnet werden, ein Band auf jeder der gegenüberliegenden Flächen.

5. Verfahren gemäß irgendeinem der Ansprüche 3 oder 4, dadurch gekennzeichnet, dass das pastenartige Gemisch (5) mit der zumindest einen zugeordneten Gewebefädenfolie (7, 8) einem Druckschritt unterworfen wird, um die zumindest eine Folie (7, 8) in das pastenartige Gemisch (5) einzubetten.

6. Verfahren gemäß Anspruch 5, dadurch gekennzeichnet, dass der Druckschritt einen Kalanderschritt sowie einen Verdichtungsschritt enthält.

7. Verfahren gemäß irgendeinem der Ansprüche 3 bis 6, dadurch gekennzeichnet, dass die halbfertigen Elemente (16) von dem Band in einem Schneidvorgang hergestellt werden.

8. Verfahren gemäß irgendeinem der Ansprüche 3 bis 7, dadurch gekennzeichnet, dass die halbfertigen Elemente (16) vor dem endgültigen Formschritt einem Vorwärmschritt unterzogen werden.

9. Verfahren gemäß irgendeinem der Ansprüche 3 bis 8, dadurch gekennzeichnet, dass die halbfertigen Elemente (16) vor dem Sintervorgang einem endgültigen Formschritt mit einer Form unterworfen werden.

10. Verfahren gemäß Anspruch 9, dadurch gekennzeichnet, dass der endgültige Formschritt mit der Form einen Formvorgang unter Wärme enthält.

11. Verfahren gemäß irgendeinem der Ansprüche 3 bis 10, dadurch gekennzeichnet, dass die Fäden (7, 8) aus einem voroxidierten Polymer auf Acrylbasis bestehen.

## Revendications

1. Procédé de fabrication d'un produit composite fritté, comprenant une étape dans laquelle une poudre métallique et/ou céramique est mélangée à un liant pour la production d'un mélange pâteux (5) destiné à être soumis à une opération de frittage, comprenant des étapes d'incorporation de filaments (7, 8) précurseurs de fibres de carbone dans le mélange (5) et d'application au mélange (5), ayant les filaments incorporés (7, 8), d'une opération de frittage dans des conditions telles que les filaments se transforment en fibres de carbone,
caractérisé en ce que le mélange pâteux (5) est extrudé sous forme d'une bande et en ce que les filaments précurseurs de fibres de carbone forment au moins une feuille textile (7, 8) qui est associée au mélange (5) après son extrusion.

2. Procédé selon la revendication 1, caractérisé en ce que les filaments (7, 8) sont formés d'un polymère à base d'une matière acrylique préalablement oxydée.

3. Procédé de fabrication d'un produit composite intermédiaire qui peut être fritté, comprenant les étapes suivantes:
le mélange d'une poudre métallique et/ou céramique à un liant pour la production d'un mélange pâteux (5),
l'incorporation de filaments (7, 8) précurseurs de fibres de carbone au mélange pâteux,
l'exécution d'une mise en forme préliminaire du mélange pâteux (5) avec les filaments incorporés (7, 8) pour la production de plusieurs éléments semi-traités (16),
caractérisé en ce que les filaments forment au moins une feuille textile (7, 8), et en ce qu'il comprend les étapes suivantes:
l'extrusion du mélange pâteux sous forme d'une bande (5), et
l'association du mélange pâteux (5) à ladite feuille textile au moins (7, 8) après l'étape d'extrusion.

4. Procédé selon la revendication 3, caractérisé en ce que deux feuilles textiles (7, 8) des filaments sont associées au mélange pâteux (5) sous forme d'une bande, à raison d'une sur chacune de ses faces opposées.

5. Procédé selon l'une des revendications 3 et 4, caractérisé en ce que le mélange pâteux (5), avec ladite feuille (7, 8) de filaments textiles au moins associée, est soumis à une étape de compression destinée à l'incorporation de ladite feuille au moins (7, 8) au mélange pâteux (5).

6. Procédé selon la revendication 5, caractérisé en ce que l'étape de compression comprend une étape de calandrage et une étape de compression.

7. Procédé selon l'une quelconque des revendications 3 à 6, caractérisé en ce que les éléments semi-traités (16) sont produits à partir de la bande à la suite d'une opération de coupe.

8. Procédé selon l'une quelconque des revendications 3 à 7, caractérisé en ce que les éléments semi-traités (16) subissent une étape de préchauffage avant l'étape de mise en forme finale.

9. Procédé selon l'une quelconque des revendications 3 à 8, caractérisé en ce que les éléments semi-traités (16) sont soumis à une étape de mise en forme finale par moulage avant l'opération de frittage.

10. Procédé selon la revendication 9, caractérisé en ce que l'étape de mise en forme finale par moulage est constituée d'une opération de thermoformage.

11. Procédé selon l'une quelconque des revendications 3 à 10, caractérisé en ce que les filaments (7, 8) sont formés d'un polymère à base acrylique préalablement oxydé.
